# EUROPÄISCHE PATENTSCHRIFT

(11) **EP 1 164 451 B1**
(45) Veröffentlichungstag und Bekanntmachung des Hinweises auf die Patenterteilung: **10.08.2005**
(21) Anmeldenummer: 01112995.4
(22) Anmeldetag: 08.06.2001
(51) Int. Cl.: G05D 1/12, G05D 1/02

(54) **Fahrzeug-Steuerungssystem zur Bahnsteuerung unter Berücksichtigung einer das Fahrzeug beeinflussenden Strömung sowie ein Verfahren zur Erzeugung einer Bahn-Trajektorie**
System for controlling a vehicle taking into account a stream acting upon the vehicle, and method for generating a trajectory
Système de contrôle de véhicule prenant en compte l'influence d'un courant sur le véhicule, et méthode de génération de trajectoire

(30) Priorität: 17.06.2000 DE 10030036
(43) Veröffentlichungstag der Anmeldung: 19.12.2001
(73) Patentinhaber: EADS Deutschland GmbH, 85521 Ottobrunn (DE)
(72) Erfinder: Lohmiller, Winfried, Dr., 80636 München (DE)

(56) Entgegenhaltungen:
- US-A- 4 812 990
- US-A- 5 457 634
- US-A- 5 574 647

## Beschreibung

Die Erfindung betrifft ein Fahrzeug-Steuerungssystem zur Bahnsteuerung unter Berücksichtigung einer das Fahrzeug beeinflussenden Strömung sowie ein Verfahren zur Erzeugung einer Bahn-Trajektorie, wobei das Fahrzeug beispielsweise ein Flugzeug, Fallschirm oder ein Schiff sein kann, deren Bahnen von Wind- bzw. Wasserströmungen beeinflußt werden können.

Aus dem allgemeinen Stand der Technik sind Verfahren bekannt, bei denen die zu steuernde Flugbahn auf der Basis einer vor dem Flug festgelegte Soll-Flugbahn sowie von in Zeitabständen bestimmten Ist-Positionen des Fahrzeugs und der zu diesen Zeitpunkten unter Einfluß vom Wind- bzw. Wasserströmungen entstandenen Abweichungen ermittelt wird. Aufgrund der Abweichung wird das Fahrzeug dann über eine Ankopplungsbahn oder manuell auf die Sollbahn zurück gesteuert.
Im allgemeinen werden die Strömungseinflüsse z.B. durch eine erhöhte Fluggeschwindigkeit entfernt anstatt sie z.B. für eine Reichweitenmaximierung, Flugzeitminimierung und Energieverbrauchminimierung auszunützen.

Weiterhin führt die Verwendung von stark suboptimalen Ankopplungsbahnen mit den daraus resultierenden Korrektursteuerungen zu einem verhältnismäßig hohen Energieaufwand.

Es ist daher die Aufgabe der Erfindung, ein Verfahren zur Bestimmung einer Sollflugbahn zu schaffen, daß für das Fahrzeug energetisch günstig ist, insbesondere die Strömungsverhältnisse optimal ausnützt.

Diese Aufgabe wird mit den Merkmalen des Anspruchs 1 gelöst. Weitere Ausführungsformen sind in den Unteransprüchen angegeben.

Im folgenden wird die Erfindung anhand der beigefügten Figuren beschrieben, die zeigen:
- Fig. 1 eine Darstellung der erfindgungsgemäß in Bezug auf eine Strömungs-Trajektorie erzeugten Bahn-Trajektorie innerhalb eines Positionstrichters, wobei es sich bei dem Fahrzeug um einen Gleitschirm handelt,
- Fig. 2 eine Darstellung einer erfindungsgemäß wie in der Figur 1 erzeugten Strömungstrajektorie, wobei das Fahrzeug ein Flugzeug oder ein Schiff ist,

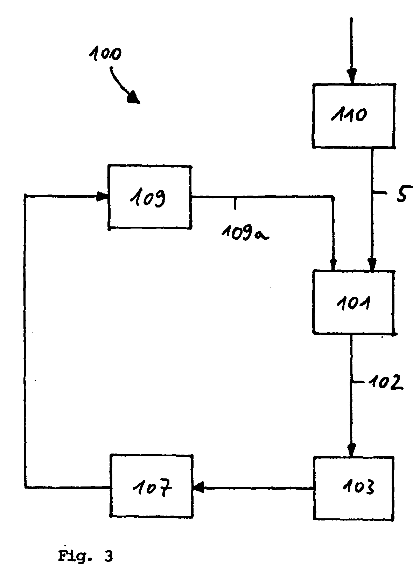

- Fig. 3 eine Darstellung eines erfindungsgemäßen Bahnsteuerungs-Systems

Die erfindungsgemäße Steuerung steuert ein Fahrzeug 1, das beispielsweise ein Flugzeug, ein Schiff oder ein Gleitschirm sein kann, von einem Startpunkt 2 über eine Bahn-Trajektorie 3 zu einem Zielpunkt 4.
Eine Strömungs-Trajektorie 5 mit einem ersten Strömungs-Bezugspunkt oder ersten Strömungspunkt 5a und weiteren Strömungspunkten 5b, 5c dient als Bezugslinie bzw. dienen als Bezugsgrößen zur Ermittlung der erfindungsgemäßen Steuerungs-Maßnahmen. Die Strömungs-Trajektorie entspricht dem Anteil der Soll-Trajektorie 3, welcher alleine auf die Transportwirkung der das Fahrzeug umgebenden Strömung zurückgeht. Der restliche Anteil der Soll-Trajektorie muß von dem Fahrzeug mit Hilfe einer Bewegung aufgrund der erfindungsgemäßen Steuerung gegenüber der umgebenden Strömung aufgebracht werden. Dieser restliche Anteil der Trajektorie 3 des Fahrzeugs 1 kann sich aus jeweils aktuellen erfindungsgemäßen Steuerungs-Maßnahmen oder in einer Off-Line-Simulation vor der Fahrt oder dem Flug ermittelt werden. Im letzteren Fall kann dann die Bahn-Trajektorie 3 als Soll-Trajektorie während der Fahrt bzw. des Fluges verwendet werden, an der sich die Bahn-Steuerung, vorteilhafterweise mit Hilfe eines Ankopplungsbahn, des Fahrzeugs nach Verfahren nach dem Stand der Technik orientieren kann.

Die Strömungs-Trajektorie 5 wird aus dem Strömungsfeld oder einem Strömungsprofil gebildet.
Dabei liegt die Kenntnis des zwei- oder dreidimensionalen vektoriellen Strömungsfelds vw(Position, Höhe, t) im Bereich der in Betracht kommenden Trajektorien, d.h. in diesem Beispiel des Windprofils oder des Windfelds, in technisch verfügbarer Form, also z.B. als Datensatz in Abhängigkeit von Position, Höhe und Zeit vor. Jeder dieser Bestimmungsgrößen kann jedoch auch eingeschränkt verfügbar sein, wodurch die erfindungsgemäße Steuerung eingeschränkt möglich ist. Die Strömungs-Trajektorie wird vom Zielpunkt 1 aus durch Integration einer grob angenommenen, errechneten oder vorbestimmten Positions-und Höhentrajektorie Position(t) bzw Höhe(t) über den Windgeschwindigkeitsvektor ermittelt. Jeder Strömngspunkt 5a, 5b, 5c kann also mit Hilfe des Integrals
∫t vw(Position(t), Höhe(t)) dt
der verbleibenden Zeit t bis zum Erreichen des Zielpunktes zugeordnet werden.

Beispielsweise ergibt sich für einen Gleitschirm die Höhe als reine Funktion der Zeit und einer festgelegten Starthöhe am Startpunkt 2 aufgrund der technischen Eigenschaften des Fallschirms wie dessen Sinkgeschwindigkeit. Generell kann die Flughöhe und auch die Position des Fahrzeugs grob zeitabhängig vorgegeben sein, z.B. in Form einer Luftfahrtstraße oder einer manuellen groben Vorberechnung. Diese Grössen können sich insbesondere über die Zeit konstant verändern, was beim Gleitschirm üblicherweise anzunehmen ist. Für Gleitschirme kann in den meisten Anwendungsfällen das Strömungsfeld, d.h. das Windfeld, vorteilhafterweise nur Höhen-abhängig vorgegeben werden, da insbesondere bei verhältnismäßig geringen Reichweiten des Gleitschirms die positionsabhängigen Veränderungen des Windes vernachlässigt werden können. Da die Höhe des Gleitschirms zeit-abhängig ist, ist der Einfluß des Windes oder des Windfeldes als zeit-abhängiger Einfluß auf den Gleitschirm darstellbar. Für einen Gleitschirm wird die Strömungs-Trajektorie 5 ermittelt aus der Strömung, d.h. dem Wind, der an der jeweiligen Höhe entsprechend des Höhenverlaufs der Fallschirm-Gleitbahn in Abhängigkeit der Zeit herrscht. Die Strömungs-Trajektorie ergibt sich dann vom Zielpunkt 4 aus gesehen durch das Integral des Geschwindigkeitsvektors des Windes über die Höhe bis zum ersten Strömungspunkt 5, wobei der dem Gleitflug des Fallschirms entsprechende Höhenverlauf über die Zeit zugrundegelegt wird.

Jedem Punkt auf der Strömungs-Trajektorie 5 kann somit einem Zeitpunkt zugeordnet werden. Die Strömungs-Trajektorie kann diskret oder als kontinuierlicher Verlauf ermittelt werden.

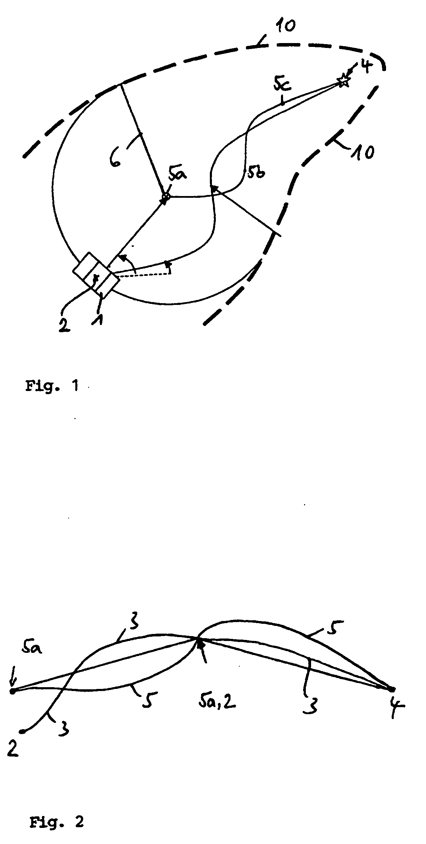

Der Bereich, für den das Strömungfeld bekannt sein muß, ist bestimmt durch den Positionstrichter 10, der die Grenze für die Orte möglicher Positionen des jeweils betrachteten Fahrzeugs angibt, welche den Zielpunkt erreichen können, und der je nach der Bewegungsart des Fahrzeugs zu bestimmen ist. Für einen Gleitschirm ergibt sich dieser aus der Reichweite 6 desselben zu jedem Punkt der Strömungs-Trajektorie 5. Beispielsweise ist die Reichweite eines Gleitschirms bestimmbar aus seiner momentanen Flughöhe, dem Gleitwinkel und der Sinkgeschwindigkeit des Gleitschirms. Die maximale Entfernung 6 vom Bezugspunkt 5 zu einer möglichen Fallschirmposition kann aus der Vorgabe der Fahrt- oder Flugzeit ermittelt werden. Die Entfernung 6 entspricht der Strecke, die das Fahrzeug innerhalb der Zeitvorgabe bei vorgegebenen Leistungseigenschaften des Fahrzeugs gegenüber der das Fahrzeug umgebenden Strömung zurücklegt. Für den ersten Bezugspunkt 5a und einer maximal zurücklegbaren Entfernung ergibt sich damit eine Kreisscheibe um den Bezugspunkt 5a. Jedes Fahrzeug welches sich in dieser Kreisscheibe befindet kann den Zielpunkt erreichen. Die Umhüllende sämtlicher Kreisscheiben um alle Strömungspunkte, für die beispielhaft die Punkte 5a, 5b, 5c in der Figur 1 eingetragen sind, bildet den Positionstrichter 10, in welchem ein Fahrzeug sich befinden muß, um den Zielpunkt erreichen zu können.

Erfindungsgemäß erfolgt die optimale Bahnsteuerung des Fahrzeugs dadurch, daß dieses in jedem seiner Bahnpunkte, beispielsweise ausgehend von dem Startpunkt 2, auf denjenigen Punkt auf der Strömungs-Trajektorie 5 zusteuert, der dem selben Bewegungs-Zeitpunkt entspricht. Der jeweilige Punkt 5a, 5b oder 5c auf der Strömungs-Trajektorie 5 wird durch die verbleibende Zeit bis zum Erreichen des Zielpunktes 4 ermittelt.Befindet sich das Fahrzeug auf der Oberfläche des Trichters 10, so wird es den Zielpunkt gerade noch erreichen können. Befindet sich das Fahrzeug innerhalb des Trichters 10, so wird die Strömungs-Trajektorie frühzeitig erreicht, so daß dann z.B. Energiereserven des Fahrzeuges, welche nicht mehr für den weiteren Flug benötigt werden, geschont werden. Auf diese Weise ist auch eine Energie-Abschätzung für die gesamte Fahrtstrecke möglich.

Im einzelnen kann die im jeweiligen Punkt der Bahn-Trajektorie 2 erfindungsgemäße momentane Steuerungs-Maßnahme des Fahrzeugs 1 durch einen Soll-Azimutwinkel 22 beschrieben werden, der für den Startpunkt oder Ist-Position des Fahrzeuges 2 der Winkel zwischen der Verbindungslinie des Startpunktes 2 und des ersten Strömungspunktes 5a und einer erdfesten Winkel-Bezugslinie 23, die beispielweise die Äquatorlinie ist. Es kann auch eine zum Soll-Azimutwinkel 22 mathematisch äquivante Soll-Größe für die Bahnsteuerung verwendet werden. Im folgenden wird die verwendete Soll-Größe mit Soll-Azimutwinkel bezeichnet. Allgemein ist als Sollgröße zu jedem Steuerungs-Zeitpunkt die Richtung der momentanen Ist-Position, z.B. der Position 2, zum momentanen Strömungspunkt, z.B. dem Punkt 5a, zu verwenden.

Diese Steuermaßnahme ist zu jedem Steuerungs-Zeitpunkt erneut vorzunehmen. Im jeweiligen Bahnpunkt bestimmt sich der zugehörige Soll-Azimutwinkel 22 als Steuermaßnahme von der jeweiligen Ist-Position des Fahrzeugs 1 aus in Bezug auf den zeitlich entsprechenden Punkt auf der Strömungs-Trajektorie 5.

Die erfindungsgemäße Bahnsteuerung für ein Flugzeug oder ein Schiff, das jeweils eine vorbestimmte Strecke zurückzulegen hat und deren Bahn vom Wind oder die Wasserströmung, im folgenden kurz Strömung genannt, beeinflußt ist, erfolgt auf ähnliche Weise:

Dabei ist eine Route des Flugzeugs oder Schiffs in zwei- oder dreidimensionaler Form sowie die zeitliche Bewegung des Fahrzeugs auf dieser Bahn grob vorgegeben oder ermittelt. Im Bereich der Route und innerhalb der zugelassenen Abweichungen von der Route, die den Positions-Trichter 10 bilden, ist ein Strömungsfeld bekannt und in Form eines geeigneten Datensatzes vorgegeben.

Entlang der vorgegebenen Route ist aufgrund des Strömungsfelds, das in geeigneter Form bereitzustellen ist, für jeden Punkt ein Strömungsvektor bekannt. Aufgrund des angenommenen zeitlichen Ablaufs, also der Geschwindigkeit des Fahrzeugs in Abhängigkeit des Ortes, ergibt sich durch das Integral der Strömungsvektoren über die Strecke eine Strömungs-Trajektorie 5. Die Strömungs-Trajektorie 5 wird also gebildet aus der Differenz der Ausgangs-Route um den Anteil der Bewegung der Fahrzeuges gegenüber der umgebenden Strömung.

Jeder Punkt der Strömungs-Trajektorie entspricht in zeitlicher Hinsicht einem Punkt auf der Bahn-Trajektorie 3. Die erfindungsgemäße Steuerung ist wieder so vorzusehen, daß das Fahrzeug in jedem Punkt auf seiner Bahn-Trajektorie (3) auf den entsprechenden Punkt der Strömungstrajektorie gesteuert wird, d.h. den jeweiligen Soll-Bahnazimutwinkel 22 ansteuert.

Die Ausgangsroute kann auch eine aus einer vorherigen Iteration oder andersartigen Näherung einer Bahn oder Route abgeleitet sein.

Der Zielpunkt kann auch ein beliebiger Wegpunkt sein. Wenn bestimmte Räume oder Felder nicht durchfahren bzw. durchflogen werden sollen, z.B. wenn in diesen Bereichen Hindernisse vorliegen, können beispielsweise Randpunkte dieser Bereiche als ein Zielpunkt oder Wegpunkt gewählt werden, um auf diese Weise ein durchfahren oder durchfliegen diese Bereiche zu verermeiden.

Das erfindungsgemäße Verfahren läuft in folgenden Schritten ab:

In einem ersten Schritt ist ein geeignetes Strömungsfeld zu ermitteln und verfügbar zu machen. Dieses muß den Bereich umfassen, in dem sich die Bahn-Trajektorie möglicherweise befindet, wobei sich dieser Bereich auch nur auf Teile der Bahn-Trajektorie beziehen kann, so daß die Erfindung nur auf Abschnitte der Fahrzeug-Bewegung angewendet werden kann. Dies kann in Form eines Datensatzes geschehen oder durch Abschätzung beispielsweise einer Wetterkarte mittels geeigneter mathematischer Annahmen. Die mathematische Form des Strömungsfeldes hängt vom Fahrzeug-Typ und der zu erreichenden Genauigkeit ab: Die optimale Bahnsteuerung nach der Erfindung für ein Schiff kommt mit einem zweidimensionalen Vektorfeld der Wasser-Strömung aus. Für die Optimierung der Flugbahn eines Flugzeugs mit veränderlichen Flughöhen ist vorzugsweise eine dreidimensionale Strömung dem erfindungsgemäßen Verfahren voranzustellen. Für einen Gleitschirm, bei dem eine konstante Sinkgeschwindigkeit angenommen werden kann und die zurückgelegte Strecke im Vergleich zu Strömungsänderungen gering ist, reicht normalerweise wie beschrieben ein eindimensionales Strömungsfeld, also ein Windprofil über die relevanten Flughöhen aus.

In einem weiteren Schritt wird ausgehend von einem Zielpunkt eine Strömungs-Trajektorie 5 als Integral der Zeit über den Strömungsvektor gebildet, wobei die maßgebliche Zeit die Fahrzeit bzw. Flugzeit ist. Somit entspricht jeder Punkt 5a, 5b, 5c auf der Strömungs-Trajektorie 5 einem Zeitpunkt, über den die Bahnsteuerung zu jedem Zeitpunkt der Steuerung mit einem entsprechenden Punkt auf der Strömungs-Trajektorie 5 in Beziehung gesetzt werden kann. Der Zielpunkt ist allgemein ein Wegpunkt, so daß auch eine optimale Bahnsteuerung nach der Erfindung für eine Abfolge von Wegpunkten vorgenommen werden kann.

Die Strömungs-Trajektorie 5 muß keine erste Trajektorie sein. Diese kann auch eine vorläufige Trajektorie sein, die in einem Iterationsprozeß beispielsweise auf Basis einer möglicherweise ebenfalls vorläufig ermittelten Bahn-Trajektorie 3 ermittelt worden ist. Die Strömungs-Trajektorie kann nach Bildung einer Bahntrajektorie wiederum neu erzeugt werden, wenn für einen solchen Fall die maßgeblichen Strömngsvektoren verändert sind. Die Strömungs-Trajektorie und somit auch die Bahn-Trajektorie kann somit iterativ ermittelt werden.

Erfindungsgemäß wird die erfindungsgemäße Bahn-Trajektorie 3 für ein sich von einem Startpunkt 2 aus bewegenden Fahrzeug 1 ermittelt. Der Startpunkt 2 ergibt sich unmittelbar aus der angestrebten Fahrzeug-Bewegung oder Mission und muß so gewählt sein, daß er für eine vorgegeben Zeit den Zielpunkt erreichen kann. Erfindungsgemäß erfolgt eine kontinuierliche oder diskrete Ermittlung des jeweils aktuellen Soll-Azimutwinkels.

Die Bahn-Trajektorie 3 kann sich unmittelbar als die tatsächliche Bahn des Fahrzeugs 1 aufgrund der erfindungsgemäßen Steuerungs-Maßnahmen als Ist-Bahn-Trajektorie ergeben. Die Bahn-Trajektorie kann jedoch auch in Form einer Soll-Bahn, die beispielweise in Form eines Datensatzes als solche vorliegt erzeugt werden, wobei sich das Fahrzeug 1 beispielsweise mittels einer Ankoppelbahn hinbewegt. Das Fahrzeug 1 kann einer solchen Sollbahn mittels einer Bahnfolge-Regelung folgen.

Da zu jedem Zeitpunkt Störgrößen auf das Fahrzeug 1 einwirken können, kann die Bahn-Trajektorie 3 mit der Fahrtzeit jederzeit neu ermittelt werden. Dies kann auch auf eine bereits gebildete Soll-Bahn-Trajektorie zutreffen.

Ein erfindungsgemäßes Bahnsteuerungs-System 100 (Figur 4) umfaßt eine Steuereinheit 101, die die jeweilige Soll-Bahngröße in Sollgrössen oder Kommandos 102 für entsprechende Stellglieder 103 zur Steuerung des Fahrzeugs 1 umsetzt. Die Soll-Bahngrößen können der jeweilige Soll-Azimutwinkel 22 oder äquivalente Grössen sein. Aufgrund des mit dem Funktionsblock 107 symbolisierten Fahrzeug-Verhaltens aufgrund der Fahrzeug-Eigenschaften sowie der dieses beeinflussenden Strömung ergibt sich eine Positionsänderung des Fahrzeugs 1, die eine entsprechende Navigations-Sensorik 109 erfaßt. Diese gibt die momentane Ist-Position 109a, möglicherweise über weitere Funktionen an die Steuereinheit 101 weiter. Die Steuereinheit 101 ermittelt die Sollgröße 102 aufgrund der Strömungs-Trajektorie aus einer Flugführungs-einrichtung 110 und insbesondere aufgrund der jeweils relevanten Punkte 5a, 5b, 5c derselben nach dem beschriebenen Verfahren und der Ist-Position 109a.

Das Bahnsteuerungs-System 100 kann auch so gestaltet sein, daß in der Steuereinheit 101, in der Flugführungs-Einrichtung 110 oder einer anderen Einrichtung aufgrund des erfindungsgemäßen Verfahren eine Soll-Bahn-Trajektorie erzeugt wird, der das Fahrzeug 1 dann mittels einer Bahnregelung nach dem Stand der Technik folgt.

## Patentansprüche

1. Verfahren zur Erzeugung einer Bahn-Trajektorie (3) eines Fahrzeugs unter Berücksichtigung einer das Fahrzeug beeinflussenden Strömung, der zunächst ein Startpunkt (2), ein Wegpunkt (4) als Zielpunkt, relevante Fahrzeug-Eigenschaften sowie ein die Bahn des Fahrzeugs (1) beeinflussendes Strömungsfeld zugrundegelegt werden,
- bei dem in einem weiteren Schritt ausgehend vom Zielpunkt (4) eine Strömungs-Trajektorie (5) als Integral der Zeit über den Strömungsvektor gebildet wird, wobei die maßgebliche Zeit die Fahrzeit ist, so daß jeder Punkt (5a, 5b, 5c) auf der Strömungs-Trajektorie (5) einem Zeitpunkt entspricht, über den die Bahnsteuerung zu jedem Zeitpunkt der Steuerung mit einem entsprechenden Punkt auf der Strömungs-Trajektorie (5) in Beziehung gesetzt werden kann,
- bei dem als Sollgröße zu jedem Steuerungs-Zeitpunkt die Richtung der momentanen Ist-Position zum momentanen Strömungspunkt (5a) verwendet wird.

2. Verfahren zur Erzeugung einer Bahn-Trajektorie eines Fahrzeugs nach dem Anspruch 1, **dadurch gekennzeichnet, daß** die Bahn-Trajektorie (3) mit der Fahrtzeit neu ermittelt wird.

3. Verfahren zur Erzeugung einer Bahn-Trajektorie eines Fahrzeugs nach dem Anspruch 1 oder 2, **dadurch gekennzeichnet, daß** die Strömungs-Trajektorie (5) oder die Bahn-Trajektorie (3) iterativ ermittelt wird.

4. Verfahren zur Erzeugung einer Bahn-Trajektorie eines Fahrzeugs nach einem der voranstehenden Ansprüche, **dadurch gekennzeichnet, daß** die Bahn-Trajektorie (3) als Sollbahn ermittelt wird und sich die Ist-Bahntrajektorie des Fahrzeugs (1) aus einer Bahnfolge-Regelung ergibt.

5. Bahnsteuerungs-System mit einer Steuereinheit (101) zur Ausführung des Verfahrens nach einem der voranstehenden Ansprüche, mit einer Navigations-Sensorik 109, um die Positionsänderung des Fahrzeugs 1 zu erfassen, mit Mitteln zum Bilden der Strömungstrajektorie als Integral der Zeit über den Strömungsvektor um aufgrund der momentanen Ist-Position (109a) und den relevanten Punkten (5a, 5b, 5c) der Strömungs-Trajektorie (5) die jeweilige Soll-Bahngröße zu ermitteln und in Form von Kommandos (102) an entsprechende Stellglieder (103) zur Steuerung des Fahrzeugs (1) zu senden.

## Claims

1. A method of generating a path trajectory (3) of a vehicle, taking account of a flow which influences the vehicle, based on a starting point (2), a route point (4) as the destination point, relevant vehicle properties and a flow field which influences the path of the vehicle (1),
- in which, in a further step, starting from the destination point (4), a flow trajectory (5) is formed as an integral of time over the flow vector, the decisive time being the travelling time, so that each point (5a, 5b, 5c) on the flow trajectory (5) corresponds to an instant, via which the path control can be related at every instant of the control to a corresponding point on the flow trajectory. (5),
- in which, as the set-point magnitude, at each control instant the direction from the instantaneous actual position to the instantaneous flow point (5a) is used.

2. A method of generating a path trajectory of a vehicle according to Claim 1, **characterized in that** the path trajectory (3) is newly determined with the travelling time.

3. A method of generating a path trajectory of a vehicle according to Claim 1 or 2, **characterized in that** the flow trajectory (5) or the path trajectory (3) is determined iteratively.

4. A method of generating a path trajectory of a vehicle according to one of the preceding claims, **characterized in that** the path trajectory (3) is determined as a set-point path, and the actual path trajectory of the vehicle (1) results from path sequence regulation.

5. Path control system with a control unit (101) to execute the method according to one of the preceding claims, with navigation sensors 109 to capture the change of position of the vehicle 1, with means for forming the flow trajectory as the integral of time over the flow vector, to determine the current set-point path magnitude on the basis of the instantaneous actual position (109a) and the relevant points (5a, 5b, 5c) of the flow trajectory (5), and to send it in the form of commands (102) to corresponding actuators (103) to control the vehicle (1).

## Revendications

1. Procédé de génération d'une trajectoire de parcours (3) d'un véhicule prenant en compte l'influence d'un courant sur le véhicule, d'abord basée sur un point de départ (2), un point de chemin (4) en tant que point cible, des propriétés importantes du véhicule ainsi qu'un champ de courant influençant le parcours du véhicule (1),
- dans lequel dans une phase suivante, à partir du point cible (4), une trajectoire de courant (5) est formée en tant qu'intégrale du temps par rapport au vecteur de courant, le temps déterminant étant la durée de trajet de sorte que chaque point (5a, 5b, 5c) de la trajectoire de courant (5) correspond à un instant par l'intermédiaire duquel le contrôle de trajectoire peut être mis en relation à chaque instant de contrôle avec un point correspondant de la trajectoire de courant (5),
- dans lequel la direction de la position effective momentanée par rapport au point de courant momentané (5a) est utilisée en tant que grandeur de consigne pour chaque instant de contrôle.

2. Procédé de génération d'une trajectoire de parcours d'un véhicule suivant la revendication 1, **caractérisé en ce que** la trajectoire de parcours (3) est déterminée à nouveau avec la durée de trajet.

3. Procédé de génération d'une trajectoire de parcours d'un véhicule suivant l'une des revendications 1 et 2, **caractérisé en ce que** la trajectoire de courant (5) ou la trajectoire de parcours (3) est déterminée par itération.

4. Procédé de génération d'une trajectoire de parcours d'un véhicule suivant l'une des revendications précédentes, **caractérisé en ce que** la trajectoire de parcours (3) est déterminée en tant que trajectoire de consigne et que la trajectoire de parcours effective du véhicule (1) résulte d'une régulation du suivi de parcours.

5. Système de contrôle de parcours comportant une unité de commande (101) pour l'exécution du procédé suivant l'une des revendications précédentes, comprenant un système de capteurs (109) de navigation pour détecter le changement de position du véhicule 1, des moyens pour former la trajectoire de courant en tant qu'intégrale du temps par rapport au vecteur de courant, en vue de déterminer sur la base de la position effective momentanée (109a) et des points importants (5a, 5b, 5c) de la trajectoire de courant (5) la grandeur de parcours de consigne correspondante et de la transmettre sous forme d'instructions (102) à des composants de réglage appropriés (103) pour le contrôle du véhicule (1).
